# EUROPEAN PATENT SPECIFICATION

(11) **EP 1 111 360 B1**
(45) Date of publication and mention of the grant of the patent: **26.07.2006**
(21) Application number: 00127072.7
(22) Date of filing: 11.12.2000
(51) Int. Cl.: G01L 23/22, G01L 23/10

(54) **Combustion pressure sensor device**
Verbrennungsdrucksensor
Capteur de pression de combustion

(30) Priority: 24.12.1999 JP 36646599
(43) Date of publication of application: 27.06.2001
(73) Proprietor: DENSO CORPORATION, Kariya-city, Aichi-pref. 448-8661 (JP)
(72) Inventor: Murai, Hiroyuki, Kariya-city, Aichi-pref.,448-8661 (JP); Hattori, Kouichi, Kariya-city, Aichi-pref.,448-8661 (JP)
(74) Representative: TBK-Patent

(56) References cited:
- GB-A- 660 189
- US-A- 3 569 747
- US-A- 4 392 082
- US-A- 4 620 438
- US-A- 4 645 965
- PATENT ABSTRACTS OF JAPAN vol. 1995, no. 08, 29 September 1995 (1995-09-29) & JP 7 139736 A (NIPPONDENSO CO LTD), 30 May 1995 (1995-05-30)

## Description

This invention relates to a combustion pressure sensor device including a structure (e.g., glow plug, spark plug, fuel injector, bolt, etc.) to be installed on an engine mounted in an engine compartment, and a combustion pressure sensor attached on the structure to detect the combustion pressure of the engine.

As this type of combustion pressure sensor device, there has been proposed a glow plug with a combustion pressure sensor as disclosed in for instance JP-A No. H7-139736. This structure is for use in an auxiliary starting device for an engine such as a diesel engine of a motor vehicle. It is comprised of a plug body (glow heater) having a heating element which heats up when supplied with the electric current, and a combustion pressure sensor (pressure sensor) which converts a pressure caused by the combustion pressure acting on the plug body into an electric signal according to the piezoelectric characteristic of a piezoelectric ceramic member (piezoelectric element).

In the combustion pressure sensor device of the above-described construction, the combustion pressure built up in the engine is detected as the displacement of the plug body installed in the engine. This displacement is transmitted as a change of the axial load caused by a tightening torque to the piezoelectric ceramic member of the combustion pressure sensor, then being converted into an electric signal and outputted as the combustion pressure. The output signal (combustion pressure) is supplied to an external circuit (ECU and other of the motor vehicle) located outside of the engine compartment through a wiring member extended from the sensor to be used for various engine controls.

Generally, however, the piezoelectric ceramic member has a very high impedance of several hundred KΩ to several ten M Ω . Therefore, the electric charge generated in the piezoelectric ceramic member of the combustion pressure sensor easily leaks to a casing and the wiring via dust, water or dew. Accordingly the output signal from the combustion pressure sensor is substantially divided on the way to the external circuit, resulting in attenuation of the output signal.

In the combustion pressure sensor, since the output signal is very weak because of the characteristic of the piezoelectric ceramic member, it is necessary to minimize the output signal attenuation, and also to take into consideration electric noise resistance in relation to the input signal (output signal from the combustion pressure sensor) going into an external circuit.

In a prior art structure, there is provided amplifying means in the vicinity of an external circuit located outside of the engine compartment, thereby amplifying the output signal from the sensor by the amplifying means. Since the wiring member routed from the sensor to the amplifying means becomes long, e.g., 1 meter to 2 meters long, a feeble output signal of the sensor is likely to be accompanied with electric noise.

Diesel engines also have recently been increasingly electronically-controlled with respect to the electric noise resistance. Particularly a fuel injector for fuel injection is not exceptional, and operated electro-magnetically recently. As a result, about ten and several amperes of current flows for example in the fuel injector located adjacently to the combustion pressure sensor. There occurs a noise along the wiring with variations of the current during fuel injector operation, or a relay contact noise occurring from a headlight and a hazard light, or an induction noise from outside. That is, there exist sources of electric noise in various places. It is, therefore, essential to take a necessary measure to eliminate the electric noise from the sensor output signal.

The above-described problem is considered to be a common disadvantage arising in the combustion pressure sensor device comprising not only the glow plug with the combustion pressure sensor but the structure (e.g., spark plug, fuel injector, bolt, etc.) attached in or on the engine located in the engine compartment, and the combustion pressure sensor mounted in the structure to convert the combustion pressure of the engine into an electric signal.

Combustion pressure sensors including transducer-amplifier assemblies are known from US-A-4620438, US-A-4645965 and US-A-4392082.

It is therefore an object of this invention to provide a combustion pressure sensor device which comprises a structure mounted in an engine and a combustion pressure sensor mounted in the structure to convert the combustion pressure of the engine into an electric signal and is capable of controlling the attenuation of an output signal supplied from the combustion pressure sensor and reducing the electric noise in relation to the output signal.

The above object is attained by employing a construction as defined in the claims.
Fig. 1 is a general schematic sectional view of a glow plug with a combustion pressure sensor;
Fig. 2 is an enlarged explanatory view showing details of the combustion pressure sensor in Fig. 1;
Fig. 3 is an explanatory view showing details of a piezoelectric element in Fig. 2;
Fig. 4 is a view showing the direction of an electrode surface in the piezoelectric element in Fig. 2;
Fig. 5 is an enlarged explanatory view showing details of a connector in Fig. 1;
Fig. 6 is a circuit block diagram of an amplifying means (a charge amplifier) of this invention;
Fig. 7 is a waveform diagram showing the effect of elimination of noise occurring at the time of fuel injection ;
Fig. 8 is a waveform showing the effect of noise occurring at the time of fuel injection in a prior art engine;
Fig. 9 is a chart showing the effect of relay-contact noise elimination ;
Fig. 10 is a waveform diagram showing one example of a relay-contact noise in a prior art engine;
Fig. 11 is a waveform diagram showing the effect of noise elimination by a low-pass filter;
Fig. 12 is a waveform showing the influence of noise where no high-pass filter is adopted in a prior art engine;
Fig. 13 is a graph showing the effect of noise elimination by the high-pass filter;
Fig. 14 is an explanatory view showing details of the combustion pressure sensor in the glow plug with the combustion pressure sensor according to an embodiment of this invention;
Fig. 15 is a view showing an example of installation of the charge amplifier on the way of a lead;
Fig. 16 is another example of the circuit block diagram of the amplifying means (the charge amplifier);
Fig. 17 is a view showing an example of application of a structure to a spark plug;
Fig. 18 is a view showing an example of application of a structure to a fuel injector; and
Fig. 19 is a view showing an example of application of a structure to bolt.

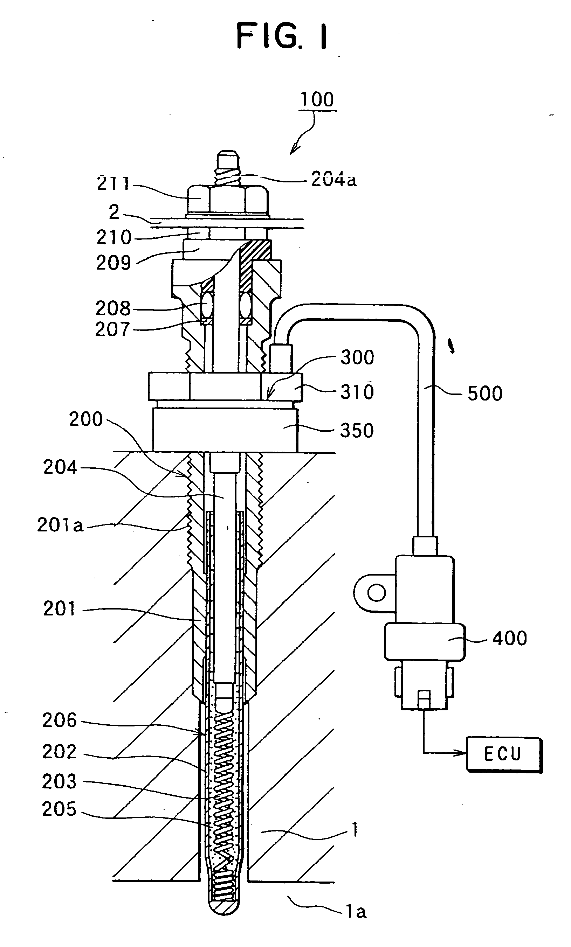

The present example, not covered by the claims but useful for understanding the invention, is directed to a combustion pressure sensor device embodied in a glow plug fitted with a combustion pressure sensor. Fig. 1 is a partly longitudinally sectional view of a glow plug 100 provided with a combustion pressure sensor of claim 1 about the whole body of which is attached to an engine head (internal combustion engine mounting section) of a diesel engine 1.

The glow plug 100 is comprised of a plug body (structure) provided with a heating element and serving as a medium for the transmission of the combustion pressure, a combustion pressure sensor 300 which is a means for converting the force (distortion displacement of a plug body) acting on a plug body 200 with the generation of the combustion pressure of the engine into an electric signal based on the piezoelectric characteristic of a piezoelectric element, a connector 400 which incorporates built-in amplifying means for amplifying the electric signal from the piezoelectric element and is capable of electrical connection to an external circuit (ECU of a motor vehicle), and a lead 500 as a wiring member for electrical connection between the connector 400 and the combustion pressure sensor 300.

In the engine head 1 is formed for each cylinder a screw hole (glow plug hole) which is open from the outside surface through into a combustion chamber 1a. The plug body 200 is inserted into each screw hole, in the axial direction (longitudinal direction) of the plug. The plug body 200 has a hollow pipe-like metal housing 201, and is secured by tightening a mounting screw 201a formed on the outside surface thereof into the screw hole formed in the engine head 1.

The plug body 200 has a hollow pipe-like sheathed tube 202 which is held in the housing 201. The sheathed tube 202 is made of a heat-resisting, corrosion-resisting alloy (e.g., stainless steel SUS310), closed at the forward end (lower end in Fig. 1) and open at the other end (upper end in Fig. 1). The sheathed tube 202 is provided on the forward end side with a heating coil 203 made of a NiCr and CoFe resistance wire, and one end of a metal rod-like center shaft 204 is inserted partly into the other end side of the sheathed tube 202.

The heating coil 203 is connected at one end to the forward end side of the sheathed tube 202 and at the other end to one end of the center shaft 204. Between the heating coil 203 and the center shaft 204 and between the center shaft 204 and the sheathed tube 202, a heat-resisting insulating powder 205 of magnesium oxide is filled.

The sheathed tube 202 has been drawn by swaging, to thereby improve the density of an insulating powder 205 filled in the sheathed tube 202 and also to firmly hold the sheathed tube 202, the center shaft 204, and the heating coil 203 through the insulating powder 205.

In a section including the heating coil 203 of the sheathed tube 202, a heating element 206 is comprised of the sheathed tube 202, the heating coil 203, and the insulating powder 205. The heating element 206 is held by jointing in the housing 201 so that the forward end thereof (forward end of the sheathed tube 202) will be exposed. The jointing of the heating element 206 (outer peripheral surface of the sheathed surface 202) to the housing 201 may be effected by fastening with a locking portion pressure or by silver brazing.

In the upper end side of the housing 201, a washer 207 made of an insulating Bakelite and an O-ring 208 made of silicon or fluoro-rubber are inserted on the center shaft 204. The washer 207 is used for centering the center shaft 208, and the O-ring 208 is for insuring water- and air-tightness in the housing 201.

The center shaft 204 is fastened to the housing 201 by a lock nut 21 along the terminal screw 204a installed on the center shaft 204 through an insulating bushing 209 made ot an insulating resin such as phenol. The insulating bushing 209 has a function to prevent a short-circuit resulting from the contact of the center shaft 204 with the housing 201.

On the terminal screw 204a provided on the other end side of the center shaft 204, a connecting bar 2 is fastened by a terminal nut 211 and electrically connected. The connecting bar 2 is connected to a power source (not shown), and grounded to the engine head 1 through the center shaft 204, heating coil 203, sheathed tube 202, and housing 201. Thus the heating element 206 in the glow plug 100 heats up, enabling to insure auxiliary ignition and starting of the diesel engine.

It should be noticed that the heating element 206 is not limited to a metallic heating element which is essentially the above metallic resistance wire, and may be for instance a ceramic heating element comprising a heating element which is made of electrically conductive ceramics of silicon nitrite and molybdenum silicide and covered with an insulator composed of insulating ceramics of silicon nitrite.

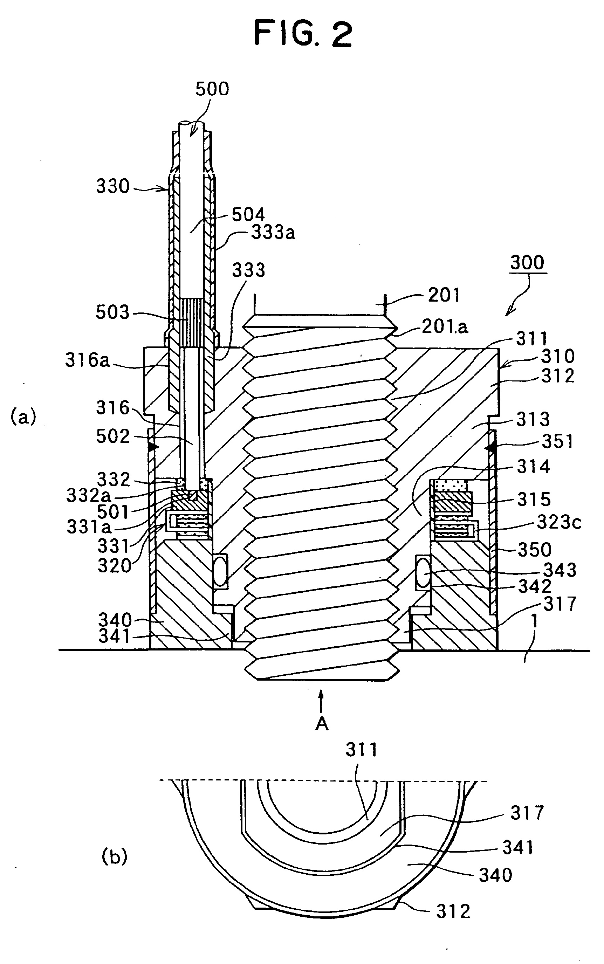

Next, the whole body of the combustion pressure sensor 300 is of about ring-shaped. As shown in Fig. 1, the combustion pressure sensor 300 is fixedly attached on the outer peripheral surface of a projecting portion of the plug body (structure) 200 which projects axially out of the surface of the engine head 1, and located in contact with the surface of the engine head 1. Fig. 2 is an enlarged view showing details of the combustion pressure sensor (pressure sensor) 300 in Fig. 1, in which Fig. 2(a) is a longitudinal sectional view and Fig. 2(b) is a view taken along the arrow A in Fig. 2(a).

The combustion pressure sensor 300 is generally comprised of a nut (sensor locking portion) 310 for attaching the sensor body to the plug body (structure) 200, a piezoelectric element portion 320 which produces an electric signal (electric charge) according to the magnitude of combustion pressure, a lead portion 330 for taking up the electric signal generated at the piezoelectric element portion 320 and leading the signal to a lead 500, a seating 340 for holding the piezoelectric element portion 320 together with the nut 310 and fixing part of the lead portion 330, and a metal case 350 for keeping the piezoelectric element portion 320 dust- and water-proof.

First, the nut 310 and the lead portion 330 will be described. The nut 310 is made of a metal and has a screw section 311 and a hexagonal portion 312 for fastening the sensor body by the mounting screw 201a formed in the housing 201 of the plug body 200. Under the hexagonal portion 312 are formed a large-diameter portion 313 and a small-diameter portion 314 in the named order. On the outer peripheral surface of the small-diameter portion 314, a heat-shrinkable insulating tube 315 made of silicon is firmly attached.

The lead portion 330 is for electrical connection between the piezoelectric element portion 320 and one end side of the lead 500, and has as components an electrode 331, an insulator 332, a locking portion 333, and one end side of the lead 500.

The electrode 331 is a ring-shaped metal electrode. The insulator 332 is made of a ring-shaped insulating material such as mica or alumina, and interposed for insulation between the electrode 331 and the nut 310. The electrode 331 and the insulator 332 are fitted on the outer edge of the small-diameter portion 314 of the nut 310 covered with the insulating tube 315.

The lead 500 is comprised of, from the innermost part to the outside, an electrically conductive signal take-out wire 501, an insulating covering 502 having insulation properties, an electrically conductive shielded wire 503 on the ground side, and an insulating covering 504 having insulating properties, which are laid one on the other in succession. The signal take-out wire 501 and the ground-side shielded wire 503 are mutually electrically insulated. Then, as shown in Fig. 2, the forward end of each of the signal take-out wire 501, the insulating covering 502, and the ground-side shielded wire 503 is partly exposed at the one end side of the lead 500.

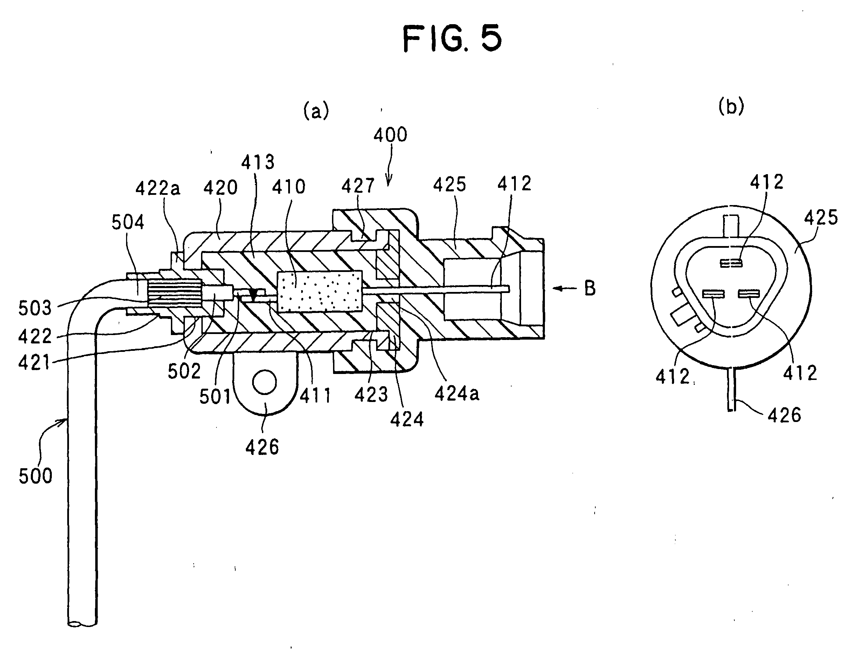

At one end side of the lead 500, the signal take-out wire 501 is connected by welding to the electrode 331 in a hole 331a formed in the electrode 331 through the hole 316 formed in the nut 310 and a cutout portion 332a formed in the insulator 332. The other end side of the lead 500 is connected to the connector 400 as shown in Fig. 5(a) described later.

The locking portion 333 is a hollow pipe-like portion for securing the lead 500 to the nut 310, and is provided on the outer periphery of one end side of the lead 500. In the upper part of the hole 316 formed in the nut 310, a locking portion retaining hole 316a is formed to retain the metal portion 333 therein. The locking portion 333 is partly inserted and secured in this retaining hole 316a.

The locking portion 333 is swaged to the lead 500. The ground-side shielded wire 503 and the locking portion 333 are electrically connected. The outer peripheral portion of the locking portion 333 projecting out of the locking portion retaining hole 316a is covered with the heat-shrinkable insulating cover 333a made of silicon.

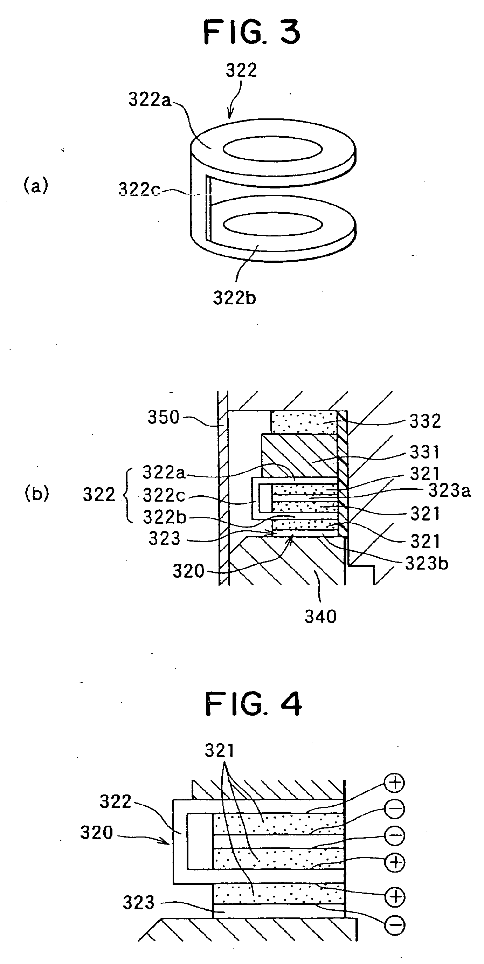

Next, the piezoelectric element 320 has an annular hollow portion which fits the small-diameter portion 314 of the nut 310, and is installed, like the electrode 331, on the insulating tube 315 along the outer peripheral surface of the small-diameter portion 314. Fig. 3 is an explanatory view showing details of the piezoelectric element 320. In Fig. 3, Fig. 3 (a) is a perspective view showing a washer ring 322 on the signal take-out side not installed, and Fig. 3(b) is an enlarged longitudinal sectional view of the piezoelectric element 320.

As shown in Fig. 3(b), the piezoelectric element 320 is of a multi-layered structure including three layers of piezoelectric ceramics (the piezoelectric element stated) 321 incorporating the washer ring 322 on the signal take-out side 322 and the washer ring 323 on the ground side. The piezoelectric ceramics 321 are ring-like lead disks of the same dimensions made of lead titanate, zirconium titanate, etc.

The washer ring 322 on the signal take-out side, as shown in Fig. 3(a), includes two thin annular metal plates 322a, 322b, upper and lower, of the same dimensions, which are fabricated by pressing in such a manner that at least a part of the washer rings 322 will be connected at the outer edge side surface 322c of the rings.

The ground-side washer ring 323 also is fabricated by the same method into the same shape as the washer ring 322 on the signal take-out side, by arranging thin ring-shaped metal plates 323a and 323b of the same dimensions, upper and lower, as shown in Fig. 3(b) and Fig. 2(a). These metal plates 323a and 323b are connected at least at one part on the outer edge side surface 323c of the ring (see Fig. 2(a)).

In the piezoelectric element 320, as shown in Fig. 3(b), the metal plate 322a, the piezoelectric ceramic member 321, the medal plate 323a, the piezoelectric ceramic member 321, the metal plate 322b, the piezoelectric ceramic member 321, and the metal plate 323b are arranged in a multi-layered form in the named order in such a manner that the outer edge side surfaces 322c and 324c of both washer rings 322 and 323 will not contact.

Next, the seating 340 is a metal seating of an about annular shape, and is for holding the piezoelectric element 320 and securing a part of the lead portion 330 together with the nut 310. The nut 310, as shown in Fig. 2(b), is provided with an oval locking portion 317 formed at the end of the small-diameter portion 314. The seating 340 has a similar oval locking portion retainer 341 so formed as to easily fit the locking portion 317.

The seating 340 is provided on the outer periphery with a cylindrical metal case 350 made of for example the stainless steel SUS304, with which the outer periphery of the combustion pressure sensor 300 is fully enclosed. The metal case 350 is produced by drawing a 0.5 mm or less thick metal sheet into a cylindrical form and joined by laser welding or copper brazing over the entire periphery to the seating 340.

In the seating 340 integrally mounted with the metal case 350, the locking portion retainer 341 and the locking portion 317 of the nut 310 are accurately opposed to each other. Furthermore, the inner diameter portion 342 of the seating 340 is reliably in firm contact with the silicon or fluoro-rubber O-ring 343 fitted in a cutout groove formed near the center of the small-diameter portion 314 of the nut 310.

The metal case 350 is fitted in contact with the large-diameter portion 313 of the nut 310. The inscribed portion 351 of the metal case 350 in contact with the large-diameter portion 313 of the nut 310 is joined throughout the periphery by a YAG laser welding.

The seating 340 is pressed against the surface of the engine head 1 by the axial tension (screw tightening force) of the nut 310. The piezoelectric element 320, the electrode 331, and the insulator 332 are interposed and locked between the nut 310 and the seating 340 by the axial tension of the nut 310.

The combustion pressure sensor 300 is installed by the following method. First, the signal take-out wire 501 is welded to the hole 331a of the electrode 331 at one end side of the lead 500. The locking portion 333 is fitted in the locking portion retaining hole 316a of the nut 310, and joined by welding or copper brazing. Furthermore, the insulator 332 is attached on the small-diameter portion 314 of the nut 310.

To connect the lead 500 to the nut 310 fitted with the locking portion 333 and the insulator 332, the electrode 331 connected at one end of the lead 500 is installed on the small-diameter portion 314 of the nut 310 having the locking portion 333 while the other end of the lead 500 is inserted into the hole 316 from the insulator 332 side. After placing the electrode 331 in a predetermined position, the locking portion 333 and the ground-side shielded wire 503 are secured by staking together.

Then, a part of the lead 500 and the locking portion 333 are covered for dust- and water-proofing with the insulating cover 333a, thereby electrically connecting the ground-side shielded wire 503 with the locking portion 333.

Next, the piezoelectric element 320 including the piezoelectric ceramic member 321 and both washer rings 322 and 323 are inserted in the small-diameter portion 314 of the nut 310. The seating 340 integrally joined to the metal case 350 by brazing or other process is inserted to the small-diameter portion 314 of the nut 310, thereby aligning the locking portion 317 with the locking portion retainer 341. Then, with the seating 340 and the nut 310 pressed into firm contact with each other, the metal case 350 and the large-diameter portion 313 of the nut are joined by laser welding, thus completing the combustion pressure sensor 300.

The combustion pressure sensor 300 is installed by inserting from the heating element 206 side to the plug body 200, then joined by tightening the mounting screw 201a of the housing 201, the screw section 311 of the nut 310, and the hexagonal portion 312.

The combustion pressure sensor 300 thus assembled converts a force (load variation in the axial direction of the plug) acting on the plug body (structure) with the generation of the combustion pressure in the combustion chamber 1a into an electric signal (electric charge) based on the piezoelectric characteristic of the piezoelectric element 320. The electric signal is applied from the lead 500 to the connector 400. The combustion pressure sensor 300 has the following features.

The first feature resides in that when the components of the piezoelectric element 320 are multi-layered, the directivity of an electrode surface of the piezoelectric ceramic member 321 which is polarized to plus and minus poles is set so that, as shown in Fig. 4, the electrode surface which contacts the washer ring 322 on the signal take-out side will be a plus pole, while the electrode surface which contacts the ground-side washer ring 323 will be a minus pole. Thus three piezoelectric ceramic members 321 are electrically connected in parallel. The output sensitivity of these three piezoelectric ceramic members 321 is summed, thereby substantially improving the sensitivity.

The second feature is that the locking portion 317 of the nut 310 and the locking portion retainer 341 of the seating 340 serve to directly transmit the torque required for turning the nut 310 to the seating 340 when turning to mount the combustion pressure sensor 300 through the mounting screw 201a attached on the housing 201 of the plug body 200.

As a result, first, the brazed portions of the metal case 350 made of a 0.5 mm or less thick metal sheet, the laser welded portion, and the seat 340, are free from the generation of excess torsional stress and shear stress. Accordingly the joined portion and the metal case 350 can be protected from breakdown.

Since the nut 310 and the seating 340 turn together, the signal take-out wire 501 connected to the electrode 331 will never be broken. Furthermore, the insulator 332 and the piezoelectric ceramic member 321 which hold both these wire and electrode will not be subjected to a torsional stress which is the primary factor of cracking, thereby enabling crack prevention.

The third feature is that, the spring constant (kg/mm) which is the index of rigidity could be decreased to a minimum possible extent because of the use of a 0.5 mm or less thick sheet for the metal case 350. Even a slight variation in the axial direction of the plug caused by the combustion pressure and acting on the piezoelectric ceramic member 321 can be properly transmitted without restraint at the metal case 350.

The fourth feature is that the piezoelectric ceramic member 321 which is the source of signal generation and the signal take-out wire 501 which is a signal transmission route are fully enclosed with the nut 310 grounded to the engine head 1, the metal case 350, the seating 340, the ground-side shielded wire 503, and the locking portion 333, thereby shutting off an electric noise from outside. It is, therefore, possible to provide a combustion pressure sensor 300 having extremely high reliability and high electric noise resistance.

The fifth feature is that the O-ring 343 is used in a small space between the seating 340 and the nut 310, and furthermore the lead 500 secured by staking through the locking portion 333 is totally covered off the outside by the use of a heat-shrinkable insulating cover 333a of silicon. Consequently, it is possible to provide a combustion pressure sensor 300 having extremely high reliability and high water- and dust-proofness.

The sixth feature is that when the metal case 350 integrally formed with the seating 340 is installed in the large-diameter portion 313 of the nut 310, at least one of the nut 310 or the seating 340 is secured and joined by laser welding with the insulator 332, the electrode 331, the piezoelectric ceramic member 321, and both washer rings 322 and 323 applied with a pressure. Therefore, a slight space formed by assembling a plurality of components can be narrowed by compression, thus enabling more remarkable detection of a slight displacement resulting from the combustion pressure.

Next explained is the connector 400 provided on the other end side of the lead 500 and incorporating built-in amplifying means. Fig. 5(a) is a general sectional view of the connector 400, and Fig. 5(b) is a view taken along the arrow B in Fig. 5(a). The connector 400 has a metal cover 420 housing a charge amplifier 410 as the amplifying means. This metal cover 420 is made by drawing a metal sheet into a form of hollow pipe having different bore sizes.

In the small-diameter bore 421 of the metal cover 420, a hollow pipe-like locking member 422 made of a metal is fitted from outside. The locking member 422 is joined by welding or copper brazing to the end portion of the metal cover 420 through a flange 422a formed on the locking member 422.

On the other hand, fitted in the large-diameter bore 423 of the metal cover 420 is a flange-shaped metal cap 424. The metal cap 424 is firmly attached in contact with the inner edge of the large-diameter bore 423, and is provided with a terminal insertion hole 424a at the center thereof.

The other end of the lead 500 projects into the metal cover 420 through the hollow hole of the locking member 422. At the other end side, the signal take-out wire 501, the insulating cover 502, and the ground-side shielded wire 503 are each partly exposed in the named order from the forward end similarly to the above one end side.

At the other end side of the lead 500, the insulating cover 504 and the ground-side shielded wire 503 are fastened together by staking through the locking member 422, thereby electrically connecting the ground-side shielded wire 503 to the locking member 422.

The charge amplifier 410 is an IC silicon-chip amplifier including an input terminal 411 and an output terminal 412 comprising three terminals: signal output, GND, and power input terminals. The amplifier 410 is molded with a resin 413. As the resin 413, a thermoplastic resin such as polyphenylene sulfide (PPS), nylon, and polybutylene phthalate (PBT), or a silicon potting agent may be used.

The input terminal 411 of the charge amplifier 410 is connected by welding to the signal take-out wire 501 of the lead 500 inserted through into the hollow hole of the locking member 422 through the input terminal 411. On the other hand, the output terminal 412 of the charge amplifier 410 is led out of the metal cover 420 through a terminal through hole 424a formed in a metal cap 424.

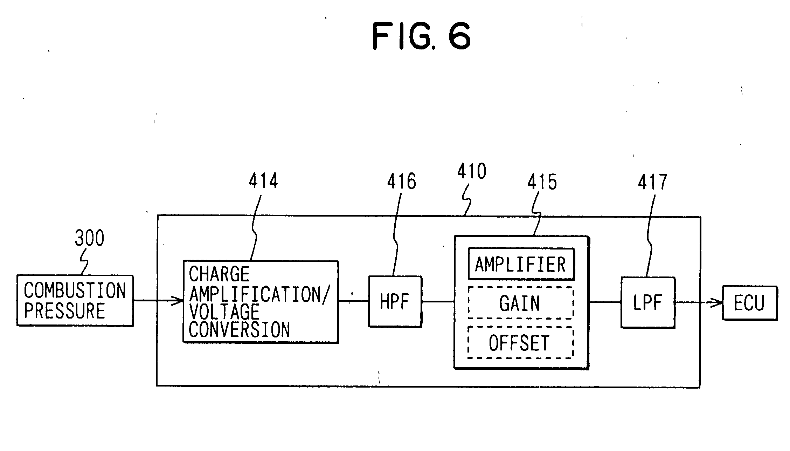

The block diagram of the circuit of the charge amplifier (an amplifier means) 410 is shown in Fig. 6. The charge amplifier 410 has at least a charge amplification/voltage conversion circuit 414 for amplifying the charge from the piezoelectric element 320 and converting into voltage, and an amplifier circuit 415 for amplifying the voltage from the charge amplification/voltage conversion circuit 414. The charge amplifier 410 further has a for instance 0.5 Hz high-pass filter (HPF) 416 between the circuits 414 and 415 and also a for instance 5 kHz low-pass filter (LPF) 417 at the rear stage of the amplifier circuit 415.

For the amplifier circuit 415, a gain control and offset control circuit which is a correction circuit may be set as needed. Furthermore, a band-pass filter may be adopted in place of the high-pass filter 416 and the low-pass filter 417 which are separately provided. In this case, it is desirable that the band-pass filter be located before the amplifier circuit 415.

In the charge amplifier 410 having the amplifier circuit 415, it is possible to amplify and convert the electric signal supplied from the piezoelectric element 320 of the combustion pressure sensor 300, into the 0 to 3.5V operating voltage that can be inputted directly into the ECU (an external circuit).

Because of the adoption of the built-in high-pass filter 416, it is possible to eliminate electric and mechanical oscillation noises such as drift of 0.1 Hz to several ten Hz low-frequency pyroelectric output (base voltage) resulting from a temperature change inherent to piezoelectric ceramics, and furthermore a several KHz to several ten kHz high-frequency mechanical oscillation, for example the natural oscillation of the glow plug and the nozzle seat oscillation during fuel injector operation.

The large-diameter bore 423 of the metal cover 420, and the metal cap 424, are covered with a cap-like connector portion 425 made of PPS, nylon, PBT, etc. for example. The connector portion 425, as shown in Fig. 5(b), supports the three output terminals 412 of the charge amplifier 410 in such a manner that the forward ends thereof will be exposed, so that other wiring member (not shown) extended from the ECU will be so shaped as to enable connection.

A stay (mounting section) 426 having a screw hole is joined to the metal cover 420 by welding. The connector 400 is mounted and secured by this stay 426 in a given position in the engine compartment. In a part of the outer peripheral side surface of the metal cover 420 which is covered with the connector section 425, there is formed a cutout groove 427. The connector section 425 fits in this cutout groove 427 to thereby improve an axial tensile strength and prevent rotation of the connector section 425 as well.

The connector 400 is formed by the following procedure. First, the lead 500 and the charge amplifier 410 are connected within the metal cover 420. The metal cap 424 is fitted to the metal cover 420. The connector 400 thus assembled is then placed and secured in an injection mold for forming the connector section 425. Furthermore, the output terminal 412 is securely held by a core within the injection mold for purpose of properly positioning, and preventing contact between, the output terminal 412 and the metal cap 424.

The connector section 425 is formed by injecting a thermoplastic resin, for example PPS, nylon, PBT, etc. into the injection mold. At this time, the resin 413 is charged into the metal cover 420 through a terminal through hole 424a of the metal cap 424, thus simultaneously molding the charge amplifier 410. Resin charging into the metal cover 420, holding to secure the output terminal 412, and forming the connector section 425 can be accomplished by a single process.

The charge amplifier 410 thus made in the form of an IC chip and resin-molded is further resin-molded, including the signal take-out wire 501, thereby achieving highly improved dust-and water-proofness. Furthermore, the whole body of the charge amplifier 410 is also enclosed with the grounded metal cover 420, metal cap 424, and locking member 422, thereby obtaining electric noise resistance.

The glow plug 100, as described above, is comprised of the plug body 200, combustion pressure sensor 300, connector 400, and lead 500. Next, the whole of combustion pressure detecting mechanism in the glow plug 100 will be described.

The plug body 200 of the glow plug 100 is attached in the screw hole (glow plug hole) provided in the engine head 1. The combustion pressure sensor 300 is attached to the plug body 200 by the attaching screw 201a of the housing 201 so that the piezoelectric ceramic member of the piezoelectric element 320 is applied with a load in the axial direction of the plug.

When the diesel engine is started, the voltage is applied from a power source (not shown) to the plug body through the connecting bar 2, being grounded to the engine head 1 though the core shaft 204, heating coil 203, sheathed tube 202, and housing 201. Thus the heating element 206 is heated up to enable to assist ignition and starting the diesel engine. After starting the engine, the combustion pressure built up in the engine is transmitted to the mounting screw 201a through the heating element 206 and the housing 201.

Subsequently, the combustion pressure transmitted to the mounting screw 201a loosens the tightening torque of the glow plug 100 in relation to the engine head 1, resulting in a decreased load applied to the piezoelectric ceramic member 321 through the screw section 311 of the nut 310 in the combustion pressure sensor 300 (that is, the load being applied to the piezoelectric ceramic member 321 varies). Therefore, the charge that generates the electric signal to be outputted in accordance with the piezoelectric characteristic of the piezoelectric ceramic member 321 varies.

The signal is outputted between the signal take-out wire 501 through the signal take-out side washer ring 322 and the electrode 331 and the ground-side shielded wire 503 through the grounded washer ring 323 on the ground side, seating 340, housing 201, mounting screw 201a, and screw section 311.

The output signal is inputted to the charge amplifier 410 of the connector 400 connected through the lead 500. The signal thus inputted is processed by the charge amplification/voltage conversion circuit 414, high-pass filter 416, amplifier circuit 415, and low-pass filter 417 successively in order of mention, then is inputted from the output terminal 412 of the charge amplifier 410 to the ECU, being used as an electric signal for combustion control. The whole of the combustion pressure detecting mechanism in the glow plug 100 has been described above.

According to the glow plug incorporating the connector having the built-in charge amplifier as described above, the connector 400 has the built-in charge amplifier (the amplifying means) 410 which amplifies the electric signal (the output signal of the combustion pressure sensor) from the piezoelectric ceramic member 321. Therefore it is possible to mount the charge amplifier 410 together with the connector 400 in the vicinity of the combustion pressure sensor 300 within the engine compartment (e.g., the engine head and the head cover).

Because of the above-described construction, it is possible to amplify, in the vicinity of the sensor 300, the output signal of the combustion pressure sensor 300. It is also possible to decrease the length of the lead (the wiring member) 500 connected between the combustion pressure sensor 300 and the charge amplifier 410 to a minimum as compared with prior art leads, thereby decreasing the stray capacitance of the lead 500 and enabling to control the attenuation of the output signal and to reduce an electric noise relative to the output signal.

Furthermore, the lead 500 is electrically shielded with the grounded shield wire on the ground side (cover member). Furthermore, the charge amplifier 410 also is electrically shielded through the ground-side shield wire 503 and the metal cover 420. Therefore, it is hard for the electric noise to ride on the electric signal (the output signal from the combustion pressure sensor 300) fed from the piezoelectric ceramic member 321.

Since the charge amplifier 410 is molded of the resin 413, it is possible to downsize the connector 400, form the charge amplifier 400 integrally with the connector 400, and realize a reliable water-and dust-proof structure in the charge amplifier 410. Furthermore, therefore, it is possible to prevent leakage of the output signal from the combustion pressure sensor 300 likely to be caused by dust, water, or moisture, thus enabling high-level control of attenuation of the output signal from the combustion pressure sensor 300.

Furthermore, the charge amplifier 410 is provided with the high-pass filter 416 and the low-pass filter 417 incorporated in the filter circuit for eliminating the electric noise from the electric signal fed from the piezoelectric ceramic member 321. That is, it is possible to effectively eliminate the electric noise from the electric signal (the output signal of the combustion pressure sensor) supplied from the piezoelectric ceramic member 321.

As a result, therefore, the input signal to be fed from the charge amplifier 410 to the ECU becomes a combustion pressure signal of an outstanding S/N ratio. That is, it is possible to eliminate, on the charge amplifier 410 side, a noise signal inherent to the glow plug which is provided with the combustion pressure sensor made of piezoelectric ceramics, that is, electric and mechanical noises such as the drift of the low-frequency pyroelectric output, the natural oscillation of the glow plug and the nozzle seat oscillation during fuel injector operation. Since the signal to be inputted to the ECU has general versatility, it is possible to alleviate a burden on improvements in hardware of the ECU.

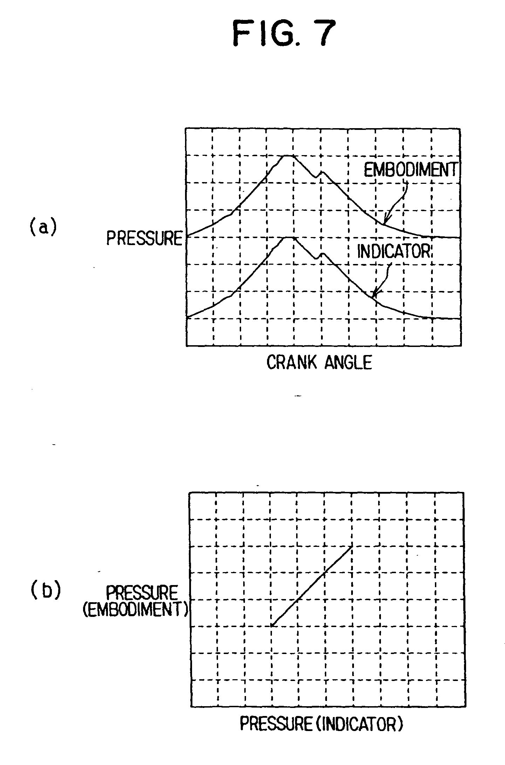

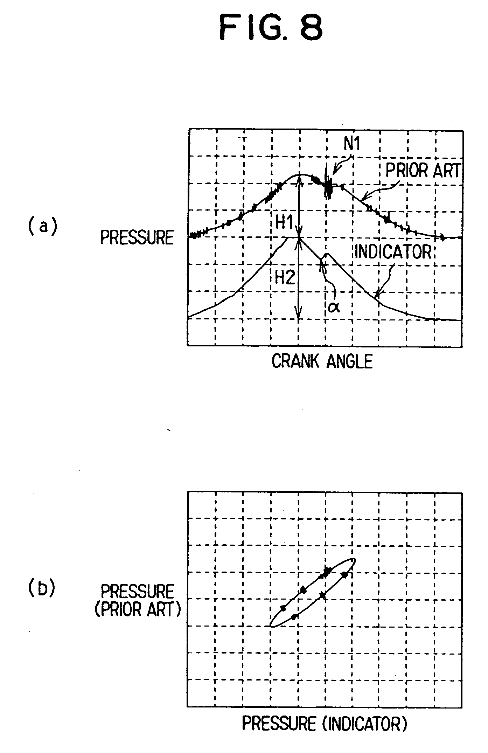

Next, advantages will be described in more details with reference to Figs. 7 to 13. Figs. 7 and 8 are waveform diagrams showing a result of engine tests during idling. Fig. 7 shows a case in which the glow plug 100 is fitted with the combustion pressure sensor, and Fig. 8 shows a case in which the glow plug is fitted with a prior art combustion pressure sensor with the charge amplifier 410 mounted in the vicinity of the ECU in the cab.

Figs. 7 and 8 show correlative output waveforms, showing in (a) a diagram for comparison of the output waveform between the glow plug with the combustion pressure sensor and a pressure indicator, and in (b) the output from the glow plug of the combustion pressure sensor on the vertical axis, and the output from the pressure indicator on the horizontal axis. Adopted as the pressure indicator is a cylinder sensor installed directly in the combustion chamber for example.

The waveform of output of the glow plug 100, as seen in Fig. 7, has approximately the same form as the output waveform of the pressure indicator, and the correlative output waveform also has approximately the same value during both pressure rise and pressure drop. Moreover, no electric noise is detected. On the other hand, the peak value H1 of the output waveform of a prior art glow plug, as shown in Fig. 8, is about 20-percent lower than the output peak value H2 of the pressure indicator. The correlative output waveform also draws an elliptical curve, indicating a time delay.

In the prior art glow plug, the regular generation of electric noise N1 is seen particularly near the point a located immediately before a pressure rise resulting from combustion, that is, at the fuel injection timing of the electromagnetic fuel injector. The electric noise N1 will make the point a indefinite, consequently giving a substantial effect to the feasibility and accuracy of detection of a pressure increase caused by combustion in the cylinder necessary for combustion control and combustion start timing.

In the meantime, according to the glow plug 100, it is possible to control the attenuation of output signal, reduce noise during fuel injector operation, and further to perform accurate combustion control by using the combustion pressure signal fed from the glow plug 100, by amplifying the output signal near the combustion pressure sensor 300, decreasing the length of the lead 500, and electrically shielding the lead 500 and the charge amplifier 410.

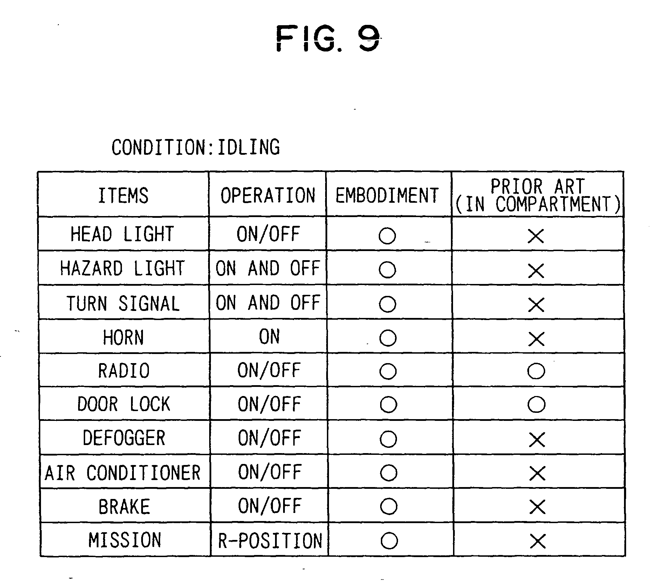

Subsequently, Fig. 9 is a chart (engine operating condition: idling) showing major influences of relay contact noise resulting from operation of 10 evaluation items in all such as head lights, hazard lights, etc. in comparison with the prior art glow plug fitted with the combustion pressure sensor. In Fig. 9, ○ indicates that no electric noise was observed, while × indicates that an electric noise was observed.

No electric noise was observed in the output signal supplied from the sensor 300 even in eight items of the prior art glow plug, except a radio and a door lock, requiring a comparatively large current in which an electric noise had been observed. That is, high electric noise immunity could be confirmed.

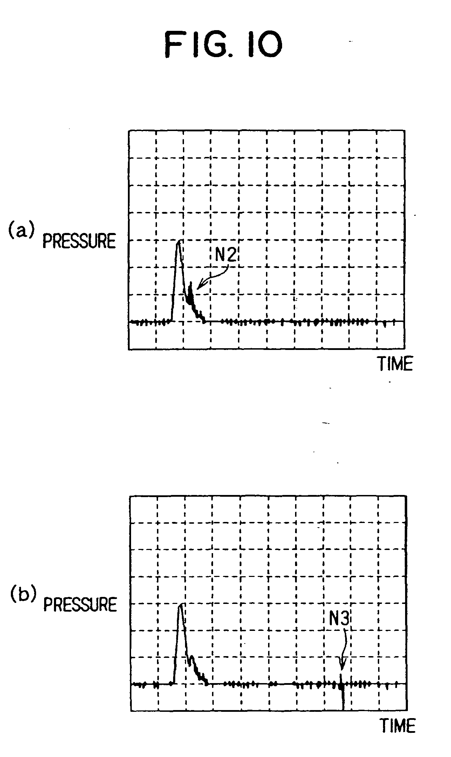

Fig. 10 is a waveform diagram showing one example of a relay contact noise occurring in the prior art glow plug fitted with a combustion pressure sensor, giving in Fig. 10(a) an example of effect on the output signal of the sensor during on/off operation of the hazard lights, and in Fig. 10(b) an example of effect on the output signal of the sensor during hazard light operation. A reason for taking up the relay contact noise as a problem is that, unlike a noise occurring during fuel injector operation, the relay contact noise is incidental, i.e., an unexpected noise.

In Fig. 10(b), the electric noise N3 occurred at a point apart from the peak value of pressure rise caused by combustion during the hazard light operation; however, in Fig. 10(a), the electric noise N2 incidentally occurred near the peak value of pressure rise caused by combustion during on/off operation of the headlights.

Therefore, if the peak value of the pressure rise is calculated in for example combustion control by using the peak hold circuit, a value plus a noise value which is greater than an actual value is obtained. For example, the ECU, judging the pressure as extremely greater than the target combustion pressure, decreases the amount of fuel to be injected, or increases the amount of EGR gas, thereby lowering the combustion pressure to the target value.

As a result, there take place a sudden decrease in engine output and accordingly irregular engine operation such as variations in rotational speed, giving the driver discomfort resulting from shocks and engine vibrations. From this point of view, therefore, it is essential to improve the S/N ratio by eliminating the electric noise from the output signal. This sort of trouble can be prevented.

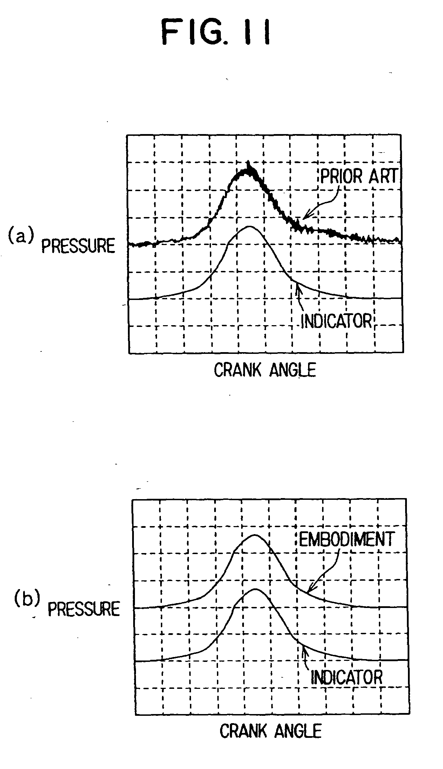

Next, Fig. 11 is a waveform diagram showing the effect of elimination a mechanical and electric noise signal by a low-pass filter 417. Shown in Fig. 11 is a result of tests conducted with the engine operated with full load at 2000 rpm. In Fig. 11, (a) is an output waveform diagram for comparison between the prior art glow plug with a combustion pressure sensor using no low-pass filter and a pressure indicator, and (b) is an output waveform comparison diagram after filtering noises through the 5 kHz low-pass filter 417. As seen from Fig. 11, a high-frequency mechanical vibration noise continuously occurring from around the engine is eliminated through the low-pass filter 417.

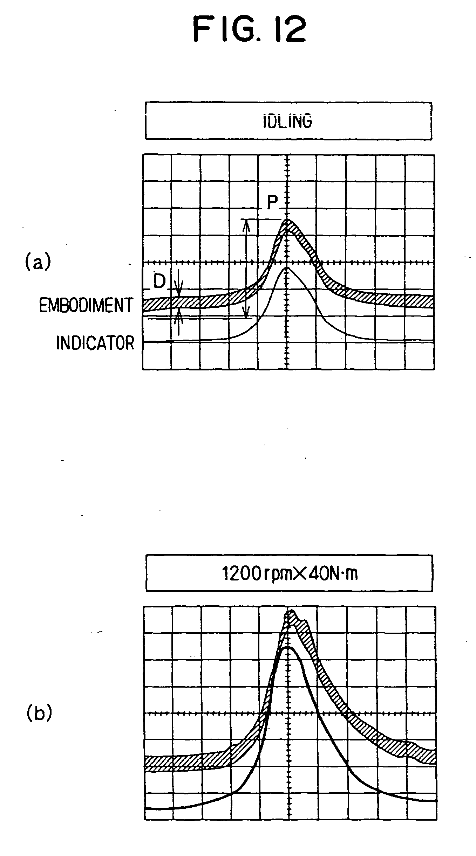

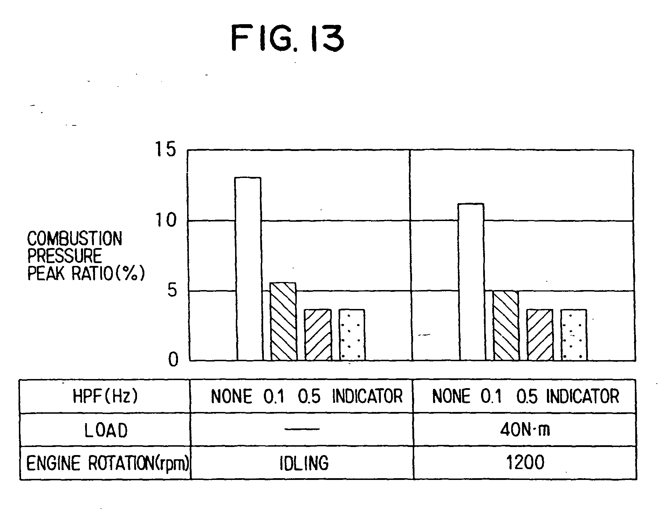

Next, Figs. 12 and 13 show the effect of elimination of mechanical and electric noises through the high-pass filter 416. Fig. 12 is an output waveform comparison diagram with the output of 64 waveforms taken in for comparison between the prior art glow plug without a high-pass filter and a pressure indicator. In Fig. 12, (a) and (b) show results of tests performed with the engine idling and also operated with 40N · m load at 1200 rpm respectively.

It is understood from the pyroelectric output inherent to the piezoelectric ceramic member that the drift width of the base voltage of output in the prior art glow plug fitted with a combustion pressure sensor is substantially great as compared with the value indicated by the pressure indicator under both engine operating conditions.

Fig. 13 makes a comparison between the drift width and the pressure indicated by the pressure indicator when the set frequency of the high-pass filter 416 is changed to 0.1 Hz and 0.5 Hz, by using the combustion pressure peak ratio. The combustion pressure peak ratio mentioned here is a ratio of the combustion pressure peak value in relation to the maximum drift width in 64 waveforms of a continuous combustion pressure output, indicating the smaller the value, the more excellent.

Using the drift width D and the combustion pressure peak value P shown in Fig. 12 (a), the combustion pressure peak ratio is given by (Dmax/P)x100 when the drift width D is of the maximum value Dmax. Also shown for comparison in Fig. 13 is the combustion pressure peak ratio of the prior art glow plug having no combustion pressure sensor, that is, the high-pass filter.

As a result, the drift width is decreased to one fourth to one fifth of prior art one by the use of a 0.5 Hz high-pass filter 416. As seen from Fig. 13, the combustion pressure peak ratio is about the same as the reading of the pressure indicator. Thus, it is possible to remove the noise of the low-frequency pyroelectric output inherent to the piezoelectric ceramics by the use of the high-pass filter 416.

### (First Embodiment)

The plug body 200 of a first embodiment is of the same construction as the example described above described above, excepting the difference that, in the first embodiment, the lead wire has been removed and a charge amplifier (amplifying means) 410 for amplifying the electric signal from the piezoelectric ceramic member (the piezoelectric element) 321 is resin-molded integrally with the combustion pressure sensor.

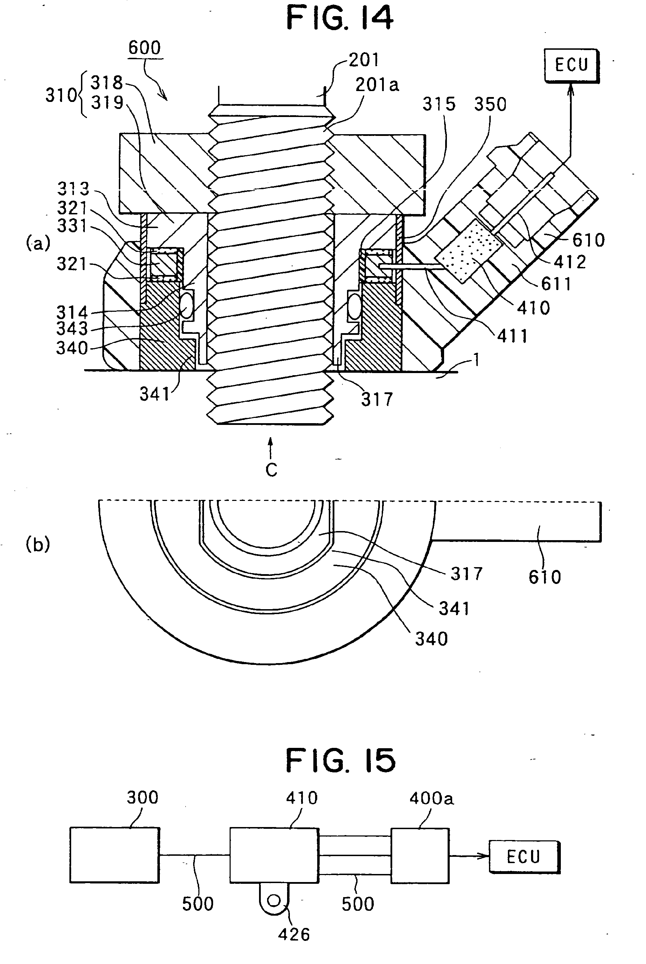

Fig. 14 is an enlarged view, showing details of a combustion pressure sensor 600 used in the glow plug 100 having the combustion pressure sensor of the present embodiment, in which (a) is a longitudinal view and (b) is a view taken along the arrow C in (a). It should be noted that, In Fig. 14, the same members as those in the example described above are designated by the same reference numerals and will not be described.

The combustion pressure sensor 600 of the present embodiment is generally comprised of the sensor fastening member 310 for attaching the sensor body to the plug body 200, the piezoelectric ceramic member 321 generating the electric signal (the charge) according to the combustion pressure generated, the electrode 331 for taking out the electric signal generated from the piezoelectric ceramic member 321, the seating 340 for holding, together with the sensor fastening member 310, the piezoelectric ceramic member 321 and the electrode 331, the metal case 350 for keeping the piezoelectric ceramic member 321 dust- and water-tight, and a connector 610 incorporating the built-in charge amplifier 410 connected with the electrode 331.

The sensor fastening member 310 of the present embodiment includes a fastening nut 318 for fastening the sensor body through the mounting screw 201a formed in the housing 201 of the plug body 200, and a hold-down portion 319, formed separately from the fastening nut 318, for holding the piezoelectric ceramic member 321 and the electrode 331.

The fastening nut 318 has the same configuration as the hexagonal portion 312 of the nut 310 used in the example described above. The hold-down portion 319 corresponds to the part excluding the hexagonal portion a312 of the nut 310, having the large-diameter portion 313 and the small-diameter portion 314. However, unlike the example described above, no hole is provided in the present embodiment for leading in the lead in the fastening nut 318 and the hold-down portion 319.

Furthermore, no threads are formed in the inner peripheral surface of the hold-down portion 319. The hold-down portion 319, therefore, can freely turn around the axis of the housing 201. On the outer peripheral surface of the small-diameter portion 314 of the hold-down portion 319, the insulating tube 315 is firmly attached.

A pair of annular piezoelectric ceramic members 321 are of a multi-layered structure holding the annular electrode 331. The multi-layered body is fitted on the outer surface of the small-diameter portion 314 of the hold-down portion 319 covered with the insulating tube 315, being held between the large-diameter portion 313 of the hold-down portion 319 and the seating 340 by the axial force of the fastening nut 318. Then, the input terminal 411 of the charge amplifier 410 is inserted through a slit or a hole formed in the metal case 350, and welded for connection in the hole formed in the outer peripheral surface of the electrode 331.

The connector 610 is molded of the resin 611, enclosing the charge amplifier 410 connected with the electrode 331, the metal case 350, and the seating 340. In the connector 610, the output terminal 412 side of the charge amplifier 410 is so shaped as to allow connection of the other wiring members (not shown) extended from the ECU, with the output terminal 412. The connector 610, when not fastened with the fastening nut 318, can freely turn around the axis of the housing 201, together with other portions of the sensor except for the fastening nut 318.

The combustion pressure sensor 600 thus constructed is installed to the plug body 200 through the mounting screw 201a of the housing 201 so that the load will be applied in the axial direction of the plug to the piezoelectric ceramic member 321.

The load being applied to the piezoelectric ceramic member 321 through the fastening nut 318 in the combustion pressure sensor 600 is lessened by the combustion pressure transmitted to the mounting screw 201a. Therefore the electric signal outputted along the piezoelectric characteristic of the piezoelectric ceramic member 321 varies in the generated load. The output signal is inputted to the charge amplifier 410 through the electrode 331, being inputted from the output terminal 412 to the ECU after processing.

According to the glow plug incorporating the combustion pressure sensor having the built-in charge amplifier as in the present embodiment, since the charge amplifier 410 is built in the combustion pressure sensor 600, it is possible to control the attenuation of the sensor output signal through the amplification, in the sensor, of the output signal of the combustion pressure sensor 600.

Furthermore, according to the present embodiment, factors of signal attenuation in relation to the output sensitivity is removed by the disuse of the lead connected between the sensor and the charge amplifier 410, thereby enabling to decrease an effect on noise running in parallel with the line and to reduce the electric noise of the output signal. The input terminal 411 of the charge amplifier 410, however, is molded simply of the resin 611, that is, partly exposed to the electric noise. Therefore, generally, there is the possibility of slight deterioration of the electric noise resistance as compared with the example described above in which the glow plug is fully shielded.

The combustion pressure sensor of the present embodiment is effective particularly when there is a room in the combustion pressure sensor mounting space. However, the combustion pressure sensor 600, when not fastened by the fastening nut 318 to widen the scope of application, can freely turn about the axis of the housing 201.

Because of the adoption of the rotatable structure, the sensor 600, when mounted, is oriented in a predetermined direction and can be mounted simply by turning the fastening nut 318, not by turning the projecting connector 610. That is, it is possible to reduce the required mounting space for mounting by turning the fastening nut 318.

Furthermore, according to the present embodiment, it is possible to realize both water-proofness and dust-proofness of the charge amplifier 410 by integrally resin injection-molding the sensor section including the hold-down portion 319, piezoelectric ceramic member 321, electrode 331, seating 340, and metal case 350, and the connector portion 600 having the built-in charge amplifier 410. As a result, the output signal of the combustion pressure sensor 600 is restricted from leading due to dust, water or frost, and the attenuation of the output signal of the combustion pressure sensor 600 is effectively minimized. Further, in comparison with the example described above, it is possible to provide a low-cost, simple-construction combustion pressure sensor by reducing the number of component parts and the work processes to one half.

Furthermore, according to the present embodiment, because of the disuse of the connector incorporating the built-in charge amplifier connected by the lead as in the example described above, there will never occur such problems as a break of the lead at the time of installation, and dents and other failures of the charge amplifier likely to be caused by shocks. In addition, since the fastening nut 318 is adopted, an impact wrench is usable, thereby further improving reliability and mounting operation efficiency.

### (Other Examples, not Covered by the Claims but Useful for Understanding the Invention)

In the example described above, the charge amplifier 410 having the stay (the attaching portion) 426 attachable within the engine compartment may be installed on the way of the lead 500. In this case also, the charge amplifier 410 can be located in the engine compartment, and accordingly the output signal of the combustion pressure sensor 300 can be amplified in the vicinity of the sensor. Therefore it is possible to control the attenuation of the output signal of the combustion pressure sensor and also to reduce the electric noise in relation to the output signal. In this case, however, as shown in Fig. 15, three leads 500 are needed, at the rear stage of the charge amplifier 410, for connection with the three output terminals, resulting in complicated connection of these three leads.

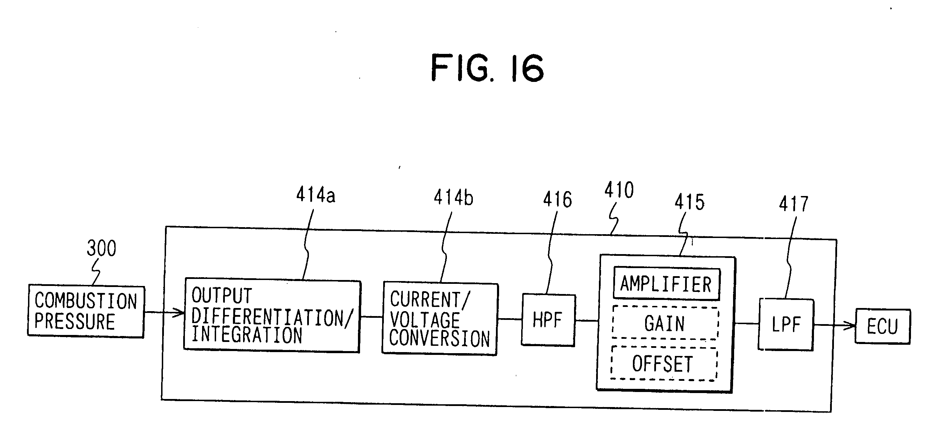

It is understood that the charge amplifier is not necessarily limited to an IC-chip amplifier, and may be a general circuit substrate of such shape and size as are applicable to the embodiment stated above. Furthermore, the circuit formation of the charge amplifier (the amplifying means) 410 may be such as is shown in Fig. 16. In Fig. 16, the charge amplification/voltage conversion circuit 414 shown in Fig. 6 is replaced with the output differentiation/integration circuit 414a for differentiating and integrating the output, and the current/voltage conversion circuit 414b for converting, into the voltage, the current from the output differentiation/integration circuit 414a.

Furthermore, in the present example, the stay (the mounting section) 426 is formed on the metal cover 420 of the connector 400 provided on the other end side of the lead 500, or on the charge amplifier (the amplifying means) 410 mounted on the way of the lead 500, to thereby enable easy mounting of the connector and the amplifying means in the engine compartment. The stay 426, however, may be dispensed with. In this case, the connector 400 and the charge amplifier may be bonded in appropriate places within the engine compartment or secured by a separate bracket.

In the embodiment described above, the glow plug with the combustion pressure sensor has been explained as an example of the combustion pressure sensor device. This invention can be applied to the combustion pressure sensor including not only the glow plug fitted with the combustion pressure sensor but the structure (e.g., the fuel injector, bolt, spark plug, etc.) installed on the engine mounted in the engine compartment and the combustion pressure sensor attached on the structure to detect the engine combustion pressure.

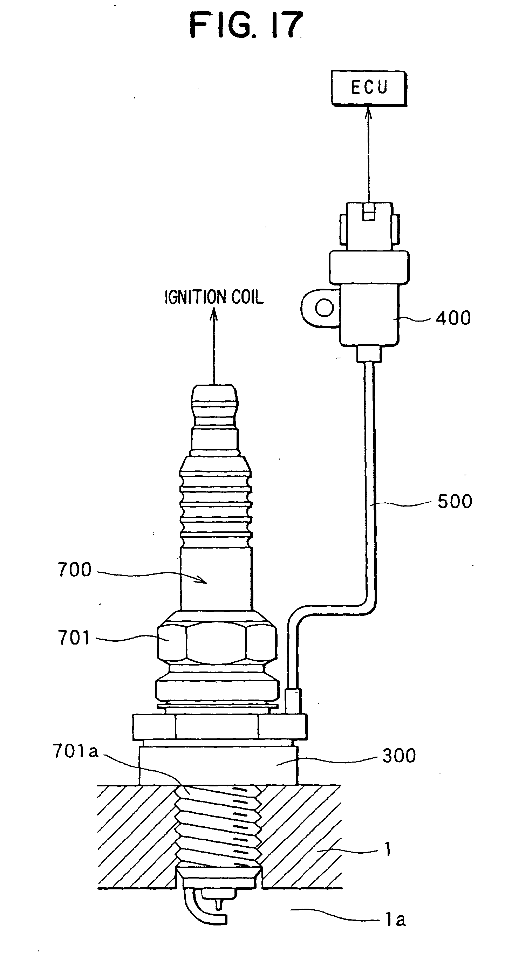

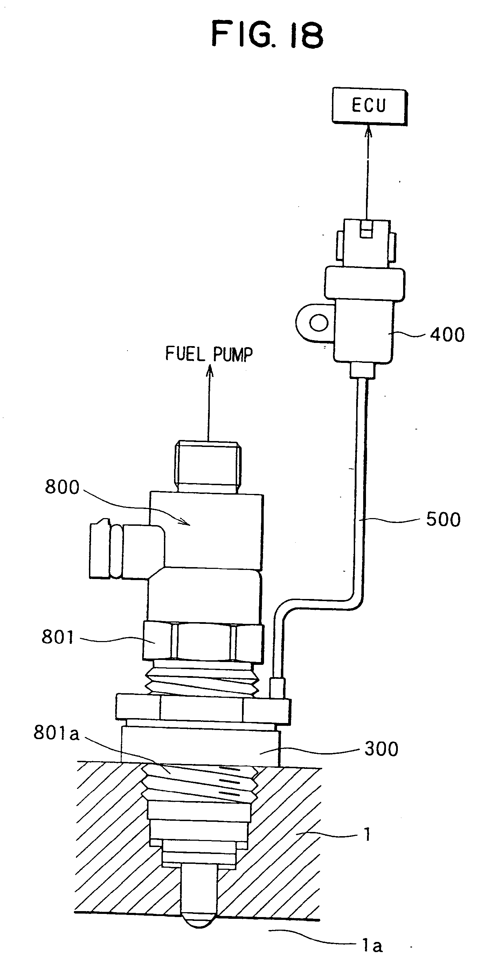

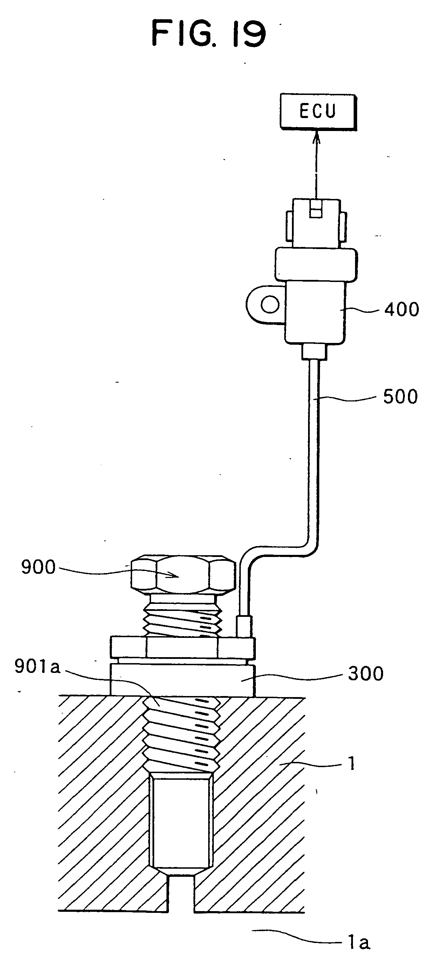

The application of an example to the spark plug 700 is shown in Fig. 17. The example of application to the fuel injector 800 is shown in Fig. 18. The example of application to the bolt 900 is shown in Fig. 19. In Fig. 17, the spark plug (the structure stated) 700 is installed in the engine head 1 of a gasoline engine by a mounting screw 701a formed in the housing 701.

In Fig. 18, the fuel injector (the structure stated) 800 injecting the fuel from the fuel pump into the combustion chamber 1a is installed by the fastening bolt 801 and the mounting screw 801a in the engine head 1 of a gasoline or diesel engine. Also in Fig. 19, the bolt (the structure stated in this injection) 900 as a member exposed into the combustion chamber 1a in the engine head 1 is mounted in the engine head 1.

In Figs. 17 to 19, the combustion pressure sensor (the pressure sensor) 300 is installed in the mounting screws 701a, 801a, 901a in the structures 700 to 900 respectively, to detect the combustion pressure of the engine by converting the combustion pressure acting on these structures into electric signals based on the piezoelectric characteristic of the piezoelectric element 321.

In examples shown in Figs. 17 to 19 also, the combustion pressure sensor 300, the connector 400, and the lead 500 are of the same construction and effect as those of the first example. It should be noticed, therefore, that the embodiment and the modifications shown in Figs. 15 and 16 are applicable also to the examples shown in Figs. 17 to 19.

## Claims

1. A combustion pressure sensor device comprising:
a structure (200, 700, 800, 900) to be mounted on an engine (1) ;
a combustion pressure sensor (600) mounted on the structure to convert a pressure caused by the combustion pressure of the engine which acts on the structure, into an electric signal according to the piezoelectric characteristic of the piezoelectric element (321); and
built-in amplifying means (410) arranged to amplify an electric signal from the piezoelectric element,
wherein
said built-in amplifying means (410) is resin-molded integrally with the combustion pressure sensor (600), and
a connector (610) capable of electric connection to an external circuit is integral with the sensor body and enclosing the built-in amplifying means (410) therein.

2. A combustion pressure sensor device as claimed in claim 1, wherein the amplifying means (410) is electrically shielded.

3. A combustion pressure sensor device as claimed in claim 1, wherein the amplifying means (410) is molded of a resin (413, 611).

4. A combustion pressure sensor device as claimed in claim 1, wherein the amplifying means (410) has a filter circuit (416, 417) for eliminating an electric noise from an electric signal supplied from the piezoelectric element (321).

## Patentansprüche

1. Verbrennungsdrucksensorvorrichtung, die folgende Bauteile aufweist:
eine Struktur (200, 700, 800, 900), um an einem Verbrennungskraftmotor (1) montiert zu sein;
einen Verbrennungsdrucksensor (600), der an der Struktur montiert ist, um einen durch den Verbrennungsdruck des Verbrennungskraftmotors verursachten Druck, der auf die Struktur wirkt, in ein elektrisches Signal gemäß der piezoelektrischen Eigenschaft des piezoelektrischen Elements (321) umzuwandeln; und
eine eingebaute Verstärkungseinrichtung (410), die angeordnet ist, um ein elektrisches Signal von dem piezoelektrischen Element zu verstärken,
wobei die eingebaute Verstärkungseinrichtung (410) mit dem Verbrennungsdrucksensor (600) einstückig mit Harz ausgeformt ist, und
wobei ein Verbindungsglied (610), das in der Lage ist, eine elektrische Verbindung zu einem äußeren Stromkreis aufzubauen, mit dem Sensorkörper einstückig ist und die eingebaute Verstärkungseinrichtung (410) in ihm umfasst.

2. Verbrennungsdrucksensorvorrichtung gemäß Anspruch 1, wobei die Verstärkungseinrichtung (410) elektrisch abgeschirmt ist.

3. Verbrennungsdrucksensorvorrichtung gemäß Anspruch 1, wobei die Verstärkungseinrichtung (410) aus einem Harz (413, 611) ausgeformt ist.

4. Verbrennungsdrucksensorvorrichtung gemäß Anspruch 1, wobei die Verstärkungseinrichtung (410) einen Filterkreis (416, 417) zum Beseitigen eines elektrischen Rauschen von einem elektrischen Signal hat, das von dem piezoelektrischen Element (321) zugeführt wird.

## Revendications

1. Dispositif capteur de pression de combustion comprenant :
une structure (200, 700, 800, 900) à monter sur un moteur (1) ;
un capteur de pression de combustion (600) monté sur la structure pour convertir une pression causée par la pression de combustion du moteur qui agit sur la structure, en un signal électrique selon la caractéristique piézoélectrique de l'élément piézoélectrique (321) ; et
un moyen d'amplification incorporé (410) agencé pour amplifier un signal électrique provenant de l'élément piézoélectrique,
dans lequel,
ledit moyen d'amplification incorporé (410) est moulé en résine d'une seule pièce avec le capteur de pression de combustion (600), et
un connecteur (610) pouvant se connecter électriquement à un circuit externe est solidaire du corps de capteur et y enferme le moyen d'amplification incorporé (410).

2. Dispositif capteur de pression de combustion selon la revendication 1, dans lequel le moyen d'amplification (410) est protégé électriquement.

3. Dispositif capteur de pression de combustion selon la revendication 1, dans lequel le moyen d'amplification (410) est moulé en résine (413, 611).

4. Dispositif capteur de pression de combustion selon la revendication 1, dans lequel le moyen d'amplification (410) comporte un circuit filtrant (416, 417) destiné à éliminer un bruit électrique d'un signal électrique provenant de l'élément piézoélectrique (321).
